# EUROPÄISCHE PATENTANMELDUNG

(11) **EP 3 311 963 A1**
(43) Veröffentlichungstag der Anmeldung: **25.04.2018**
(21) Anmeldenummer: 16195186.8
(22) Anmeldetag: 21.10.2016
(51) Int. Cl.: B25J 19/02, B25J 5/00, B21D 5/02, B21D 5/00, B21D 43/10

(54) **POSITIONIERBARE ROBOTERZELLE, FERTIGUNGSEINRICHTUNG MIT EINER FERTIGUNGSVORRICHTUNG UND MIT POSITIONIERBARE ROBOTERZELLE SOWIE VERFAHREN ZUM BETRIEB EINER SOLCHEN POSITIONIERBAREN ROBOTERZELLE**

(71) Anmelder: Bystronic Laser AG, 3362 Niederönz (CH)
(72) Erfinder: STEIN, Christian, 5707 Seengen (CH)
(74) Vertreter: Patentbüro Paul Rosenich AG

(57) **Zusammenfassung**

Die Erfindung betrifft eine positionierbare Roboterzelle (21) zur Anordnung an einer Biegemaschine (14). Die Roboterzelle (21) umfasst ein Gestell (22) zur Aufnahme des Roboters (24) und eine Aufnahmeeinrichtung (31) für ein Werkstück (16) sowie eine Positioniereinrichtung (41) zur Umpositionierung der Roboterzelle (21). Weiter ist eine erste Sensoreinrichtung (61) zur Erfassung der Position der Roboterzelle (21) relativ zur Fertigungsvorrichtung vorgesehen. Die Erfindung betrifft zudem eine Fertigungseinrichtung mit einer Biegemaschine (14) und mit einer solchen Roboterzelle (21) sowie ein Verfahren zum Betrieb einer solchen Roboterzelle (21) an einer Biegemaschine (14).

## Beschreibung

Die Erfindung betrifft eine positionierbare Roboterzelle zur Anordnung an einer Fertigungsvorrichtung nach dem Oberbegriff des Anspruchs 1 sowie eine Fertigungseinrichtung mit einer Fertigungsvorrichtung und mit einer solchen positionierbaren Roboterzelle nach Anspruch 12. Weiter betrifft die Erfindung ein Verfahren zum Betrieb einer solchen positionierbaren Roboterzelle an einer Fertigungsvorrichtung nach Anspruch 13.

Mit einer Fertigungsvorrichtung, insbesondere mit einer Blechbearbeitungsvorrichtung werden unter anderem oftmals Einzelteile, teils in Kleinserien, hergestellt. Dabei handelt es sich bei diesen Einzelteilen oftmals um wiederkehrende Teile oder auch um Serienteile.

Beispielsweise werden mit einer Biegemaschine oder mit einer Abkantpresse Werkstücke gebogen. Insbesondere bei einer Serienfertigung ist die Bedienung nicht nur aufwändig, sondern für den Bediener teils auch ermüdend.

Weitere Blechbearbeitungsvorrichtungen sind beispielsweise Laserschneidmaschinen oder Fluidstrahlschneidmaschinen. Unter dem Begriff "Fertigungsvorrichtung" wird in diesem Zusammenhang im Wesentlichen jede Maschine verstanden, welche zur Fertigung von zu zuführenden Werkstücken geeignet ist.

Es ist bekannt, dass mit an Fertigungsvorrichtungen angeordneten Robotern Teile beziehungsweise Werkstücke automatisch gefertigt werden können und dadurch die Kosten für die Herstellung in einer Serienfertigung niedriger als bei einer manuellen Zuführung der Werkstücke zur Fertigungsvorrichtung sind.

Nachteilig an den allgemein bekannten Lösungen ist, dass der Arbeitsbereich des Roboters gegen ein unbeabsichtigtes Eindringen in denselben abgesperrt werden muss. Des Weiteren ist einer Fertigungsvorrichtung ein Roboter fest zugeordnet, was z. B. bei einer Neueinrichtung einer Produktionshalle einen zusätzlichen Arbeitsaufwand bedeutet sowie eine manuelle Bedienung der Fertigungsvorrichtung behindert oder gar verhindert.

Aus der DE1 020111 0761 7A1 ist eine positionierbare Roboterzelle zur Anordnung an einer Fertigungsvorrichtung bekannt. Die Roboterzelle weist ein Gestell zur Aufnahme eines Roboters und zumindest eine Aufnahmeeinrichtung für zumindest ein Werkstück auf. Mit einem in der Roboterzelle angeordneten Roboter als Handlingseinrichtung werden nach der Anordnung der Roboterzelle an der Fertigungsvorrichtung Werkstücke dieser zugeführt und abgeführt.

Nachteilig ist, dass nach der Positionierung der Roboterzelle an der Fertigungsvorrichtung die Roboterzelle beziehungsweise der Roboter in einer bestimmten Relation zur Fertigungsvorrichtung ausgerichtet werden muss.

Aus der EP0636435B1 ist eine positionierbare Roboterzelle zur Anordnung an einer Fertigungsvorrichtung bekannt. Die Fertigungsvorrichtung ist eine Blechbearbeitungsvorrichtung und hier insbesondere eine Biegemaschine oder eine Abkantpresse. Diese Roboterzelle weist auch ein Gestell zur Aufnahme eines Roboters und zumindest eine Aufnahmeeinrichtung für zumindest ein Werkstück auf. Als Positioniereinrichtung zur Umpositionierung der Roboterzelle sind Räder am Gestell vorgesehen.

Am Boden vor der Fertigungsvorrichtung sind mehrere Zentrierungsblöcke angeordnet. Am Gestell der Roboterzelle sind mehrere Zentrierungsköpfe vorgesehen, welche in die Zentrierungsblöcke hineingesteckt oder aus denen herausgezogen werden können. Dadurch wird die Roboterzelle in einer bestimmten Position relativ zu der Fertigungsvorrichtung ausgerichtet.

Nachteilig an dieser bekannten Lösung ist, dass am Boden Zentrierungsblöcke vorgesehen sein müssen und dadurch nur ein definiertes Positionierraster für die Roboterzelle vorhanden ist.

Aufgabe der vorliegenden Erfindung ist es somit, eine positionierbare Roboterzelle zur Anordnung an einer Fertigungsvorrichtung, insbesondere an einer Blechbearbeitungsvorrichtung, wie beispielsweise an einer Biegemaschine oder an einer Abkantpresse, zu schaffen, welche die vorgenannten Nachteile nicht aufweist und insbesondere flexibel positionierbar ist. Weiter ist es die Aufgabe der vorliegenden Erfindung eine Fertigungseinrichtung mit einer Fertigungsvorrichtung, insbesondere mit einer Blechbearbeitungsvorrichtung, wie beispielsweise mit einer Biegemaschine oder mit einer Abkantpresse, und mit einer solchen positionierbaren Roboterzelle zu schaffen sowie ein Verfahren zum Betrieb einer solchen positionierbaren Roboterzelle zur Verfügung zu stellen.

Die Aufgaben werden durch die Merkmale des unabhängigen Anspruchs gelöst. Vorteilhafte Weiterbildungen sind in den Figuren und in den abhängigen Patentansprüchen dargelegt.

Gemäss der Erfindung ist zumindest eine erste Sensoreinrichtung zur Erfassung der Position der Roboterzelle relativ zur Fertigungsvorrichtung vorgesehen.

Diese zumindest eine erste Sensoreinrichtung ist ein Teil einer Positionserfassungseinrichtung beziehungsweise bildet diese aus. Nach der Positionierung der positionierbaren Roboterzelle an der Fertigungsvorrichtung wird mittels der zumindest einen ersten Sensoreinrichtung die Position der positionierbaren Roboterzelle relativ zu derselben bestimmt. Die zumindest eine erste Sensoreinrichtung ist vorteilhaft über eine Steuerungseinheit gesteuert. Weiter ist die zumindest eine erste Sensoreinrichtung an zumindest einem bewegbaren Element angeordnet, beispielsweise eines Elements eines in der positionierbaren Roboterzelle angeordneten Roboters. Mittels dieses zumindest einen bewegbaren Elements kann die zumindest eine erste Sensoreinrichtung entsprechend im Raum bewegt werden und die gewünschten Tätigkeiten ausführen.

In diesem Zusammenhang werden unter dem Begriff "Positioniereinrichtung" beispielsweise Räder, Rollen, Schienen, Schlitten aber auch Hilfsmittel, wie z. B. Führungen, Haken, Ösen oder dergleichen, für eine externe beziehungsweise autonome Umpositioniereinrichtung, wie ein Palettenwagen, ein Gabelstapler, ein Kran oder dergleichen, verstanden.

Vorzugsweise ist zumindest die erste Sensoreinrichtung selbsterkennend, womit diese von sich aus die Erfassung der Position der Roboterzelle relativ zu der Fertigungseinrichtung durchführt.

Vorteilhaft ist zumindest die erste Sensoreinrichtung automatisch selbsterkennend, so dass nach der Positionierung der Roboterzelle die Erfassung der Position der Roboterzelle relativ zu der Fertigungseinrichtung selbstständig und vorteilhaft vollständig ohne Zutun des Bedieners erfolgt.

Bevorzugt umfasst zumindest die erste Sensoreinrichtung zumindest einen ersten Sensor zum Detektieren und/oder zum Messen der Position, was eine einfache Erfassung der Position der Roboterzelle relativ zu der Fertigungseinrichtung ermöglicht.

Der zumindest eine erste Sensor ist beispielsweise ein optischer, vorteilhaft ein Lasersensor, womit die Erfassung der Position der Roboterzelle relativ zu der Fertigungseinrichtung einfach über optische Detektion und/oder Messung erfolgen kann.

In einer alternativen Ausführungsform ist der zumindest eine erste Sensor ein Schallsensor, vorteilhaft ein Ultraschallsensor, womit die Erfassung der Position der Roboterzelle relativ zu der Fertigungseinrichtung einfach über Schalldetektion beziehungsweise über Ultraschalldetektion erfolgen kann.

In einer weiteren alternativen Ausführungsform ist der zumindest eine erste Sensor ein mechanischer Sensor, womit die Erfassung der Position der Roboterzelle relativ zu der Fertigungseinrichtung einfach über mechanische Detektion, wie beispielsweise eine Abtastung, erfolgen kann.

In einer weiteren alternativen Ausführungsform ist der zumindest eine erste Sensor ein magnetischer Sensor, womit die Erfassung der Position der Roboterzelle relativ zu der Fertigungseinrichtung einfach über magnetische Detektion erfolgen kann. Der magnetische Sensor ist beispielsweise ein permanentmagnetischer oder ein elektromagnetischer Sensor.

Dabei kann zumindest die erste Sensoreinrichtung auch zumindest einen ersten Sensor umfassen, der unterschiedliche Arten von Messungen und/oder Detektionen ermöglicht. Damit wird insbesondere eine sehr flexibel einsetzbare positionierbare Roboterzelle geschaffen, wobei die Erfassung der Position der Roboterzelle relativ zu der Fertigungseinrichtung mit der Art der Messung und/oder Detektion erfolgt, welche in der dann vorliegenden Situation am vorteilhaftesten ist.

Vorteilhaft wird dem zumindest einen ersten Sensor eine Auswerteeinheit zugeordnet, welche die Position der Roboterzelle anhand der vom Sensor gelieferten Messdaten, insbesondere mithilfe eines mathematischen Modells, auswertet und eine Position relativ zur Fertigungsvorrichtung bestimmt. Damit wird eine besonders exakte Positionierung der Roboterzelle relativ zur Fertigungsvorrichtung ermöglicht.

Im Zusammenhang mit den vorgenannten Ausführungen wird unter Messung einer Position eine Verknüpfung von zumindest zwei Positionsparametern verstanden und unter Detektion die Erkennung von zumindest einem Positionsparameter verstanden.

Vorzugsweise umfasst zumindest die erste Sensoreinrichtung zumindest einen weiteren Sensor, wobei der zumindest eine weitere Sensor ein optischer, vorteilhaft ein Lasersensor, und/oder ein Schallsensor, vorteilhaft ein Ultraschallsensor, und/oder ein mechanischer und/oder ein magnetischer Sensor ist. Damit wird ebenfalls eine sehr flexibel einsetzbare positionierbare Roboterzelle geschaffen, wobei die Erfassung der Position der Roboterzelle relativ zu der Fertigungseinrichtung mit der Art der Messung erfolgt, welche in der dann vorliegenden Situation am vorteilhaftesten ist.

Bevorzugt ist eine Umpositioniereinrichtung zur Umpositionierung der Roboterzelle vorgesehen, welche die Umpositionierung derselben zusätzlich zur Positioniereinrichtung vereinfacht. Die Umpositioniereinrichtung umfasst beispielsweise Führungen, Haken, Ösen oder dergleichen, für eine vorteilhaft externe beziehungsweise autonome Umpositioniereinrichtung, wie beispielsweise ein Palettenwagen, ein Gabelstapler, ein Kran oder dergleichen.

Vorteilhaft wirkt die Umpositioniereinrichtung mit der zumindest einen ersten Sensoreinrichtung zusammen beziehungsweise erfasst diese die Umpositionierung der Roboterzelle.

Vorzugsweise weist die zumindest eine Aufnahmeeinrichtung zumindest ein auswechselbar auf einer Auflagefläche der Aufnahmeeinrichtung anordnenbares Führungselement auf und die Position des zumindest einen Führungselements ist von einer Sensoreinrichtung erfassbar. Diese Aufnahmeeinrichtung ist flexibel an Werkstücke und/oder bearbeitete Werkstücke, wie Biegeteile, anpassbar. Durch die Erfassung der Position des zumindest einen Führungselements mittels einer Sensoreinrichtung wird sichergestellt, dass eine Handlingseinrichtung, wie beispielsweise ein Roboter, das Werkstück sicher bewegen kann.

Vorteilhaft wird die Position des zumindest einen Führungselements von zumindest der ersten Sensoreinrichtung erfasst, womit auf zusätzliche Sensoreinrichtungen verzichtet werden kann und damit die Kosten für die Herstellung der positionierbaren Roboterzelle geringgehalten werden können.

Bevorzugt weist die Roboterzelle zumindest eine Kommunikationsverbindungseinrichtung zum kommunikativen Verbinden der Roboterzelle mit der Fertigungsvorrichtung auf, womit eine Kommunikation zwischen diesen ermöglicht ist. Vorteilhaft erfolgt die Kommunikation zwischen der Roboterzelle und der Fertigungsvorrichtung über Funk und/oder WLAN und/oder GPS und/oder über Bluetooth®. Zusätzlich oder alternativ kann auch zumindest eine Kabelverbindung zwischen der Roboterzelle und der Fertigungsvorrichtung vorgesehen sein.

Vorzugsweise ist zumindest eine weitere Sensoreinrichtung zur Erkennung von mehreren, gleichzeitig ergriffenen Werkstücken vorgesehen, womit eine zuverlässige, vorteilhaft automatische, Serienproduktion gewährleistet wird. Die zumindest eine weitere Sensoreinrichtung erkennt, wenn von der Handlingseinrichtung versehentlich mehr als ein Werkstück ergriffen wird. In einem derartigen Fall wird kein Werkstückbearbeitungsvorgang eingeleitet, um eine ungenaue Bearbeitung zu verhindern.

Bevorzugt ist zumindest eine Werkstückvereinzelungseinheit vorgesehen, mittels der aneinanderhaftende beziehungsweise aneinander liegende und von der Handlingseinrichtung ergriffene Werkstücke voneinander getrennt werden können. Diese zumindest eine Werkstückvereinzelungseinheit umfasst zumindest eine erste Halteeinrichtung für ein Werkstück sowie zumindest eine weitere Halteeinrichtung für ein weiteres Werkstück, womit aneinanderhaftende beziehungsweise aneinander liegende Werkstücke einfach voneinander trennbar sind.

Vorteilhaft sind die zumindest eine erste Halteeinrichtung und die zumindest eine zweite Halteeinrichtung einander zugewandt, womit aneinanderhaftende beziehungsweise aneinander liegende Werkstücke besonders einfach voneinander trennbar sind.

Die zumindest eine erste Halteeinrichtung und/oder die zumindest eine zweite Halteeinrichtung sind beispielsweise pneumatisch oder magnetisch ausgebildet.

Vorzugsweise ist eine Umgreifeinrichtung zum Umgreifen eines Werkstücks beziehungsweise eines bearbeiteten Werkstücks vorgesehen, womit ein einfaches Handling in der Produktion von bearbeiteten Werkstücken gewährleistet ist. Beispielsweise wird ein Werkstück von der Fertigungsvorrichtung bearbeitet, mittels der Umgreifeinrichtung umgegriffen und in einer anderen Ausrichtung der Fertigungsvorrichtung zur weiteren Bearbeitung zuführbar. Die Umgreifeinrichtung ist vorteilhaft zumindest ein Teil einer Umgreifstation, welche weiter vorteilhaft in oder an der Roboterzelle angeordnet ist.

Vorteilhaft wirkt die Umgreifeinrichtung mit einer weiteren oder zumindest einer der vorgenannten Sensoreinrichtungen zusammen, womit beispielsweise die Art der Werkstücke, deren Position zur Fertigungsvorrichtung und/oder einer Mehrfachergreifung von mehreren Werkstücken gleichzeitig erfasst wird und dadurch eine vorteilhafte Serienproduktion ermöglicht ist.

Bevorzugt ist zumindest eine Handlingseinrichtung für das Handling von Werkstücken vorgesehen, womit eine kompakte und vielseitig einsetzbare positionierbare Roboterzelle geschaffen wird.

Vorteilhaft umfasst die zumindest eine Handlingseinrichtung zumindest einen Roboter, der weiter vorteilhaft ein Mehrachsen-Roboter ist.

Vorteilhaft ist zumindest eine Sensoreinrichtung an der zumindest einen Handlingseinrichtung vorgesehen, womit einfach Daten erfassbar sind. Besonders vorteilhaft ist die erste Sensoreinrichtung an der zumindest einen Handlingseinrichtung vorgesehen, womit einfach die Position der Roboterzelle relativ zu der Fertigungsvorrichtung erfassbar ist.

Die zumindest eine Sensoreinrichtung ist vorteilhaft lösbar an der zumindest einen Handlingseinrichtung vorgesehen, womit diese nach dem Erfassen der erforderlichen Daten diese von der zumindest einen Handlingseinrichtung entfernbar ist und diese nachfolgende Bewegungen der Handlingseinrichtung beziehungsweise die Fertigung nicht behindert.

Vorzugsweise umfasst eine erfindungsgemässe Fertigungseinrichtung eine Fertigungsvorrichtung, insbesondere eine Blechbearbeitungsvorrichtung, wie beispielsweise eine Biegemaschine oder eine Abkantpresse, und eine positionierbare Roboterzelle, welche zumindest eines der vorgenannten Merkmale aufweist.

Beim erfindungsgemässe Verfahren zum Betrieb einer positionierbaren Roboterzelle, welche zumindest eines der vorgenannten Merkmale aufweist, an einer Fertigungsvorrichtung, insbesondere an einer Blechbearbeitungsvorrichtung, wie beispielsweise an einer Biegemaschine oder an einer Abkantpresse, wird die Roboterzelle an der Fertigungsvorrichtung positioniert. Dann wird die Position der Roboterzelle relativ zur Fertigungsvorrichtung mittels zumindest der ersten Sensoreinrichtung erfasst.

Dadurch ist die genaue Position der Roboterzelle relativ zur Fertigungsvorrichtung bekannt und kann für die Fertigung von Werkstücken berücksichtigt werden.

Mit den erfassten Daten wird beispielsweise eine Basis bestimmt, wobei die Bewegungen der Handlingseinrichtung, z. B. des Roboters, relativ zu dieser Basis erfolgen. Die Bewegungen der Handlingseinrichtung sind dabei vorteilhaft immer die gleichen und nur die Basis ändert sich. Der Sockel der Handlingseinrichtung ist vorteilhaft die Nullposition eines Koordinatensystems. Es wird somit die Position, der Winkel und/oder die Richtung bezüglich des Nullposition bestimmt, welche sich vorteilhaft auf das (Welt-)Koordinatensystems der Handlingseinrichtung, insbesondere eines Roboters, bezieht.

Mit dem zumindest einen Sensor, der beispielsweise an der Handlingseinrichtung, z. B. am Roboterarm und vorteilhaft lösbar, angeordnet ist, werden Linien abgefahren und die entsprechenden Entfernungen zu diesen gemessen. Wird dieses Verfahren an zwei Linien durchgeführt, kann damit auch eine Verdrehung der Roboterzelle relativ zur Fertigungsvorrichtung einfach bestimmt werden.

Alternativ werden zumindest zwei Punkte angesteuert und zur Bestimmung der entsprechenden Entfernungen erfasst.

Auf Basis der erfassten Parameter, z. B. der Entfernungsparameter, wird beispielsweise eine Grafik ermittelt.

Vorzugsweise wird nach dem Erfassen einer ersten Position der Roboterzelle die Roboterzelle in zumindest eine weitere Position umpositioniert wird. Wird bei der ersten Messung erkannt, dass nicht alle oder keine der erforderlichen Fertigungsschritte ausführbar sind, wird die Roboterzelle, vorteilhaft durch eine Umpositioniereinrichtung, in eine Position umpositioniert, in welcher die erforderlichen Fertigungsschritte durchführbar sind. Bevor die Fertigung startet, wird eine erneute Messung zur Erfassung der Position der Roboterzelle relativ zu der Fertigungsvorrichtung durchgeführt.

Bevorzugt wird die Roboterzelle mit der Fertigungsvorrichtung kommunikativ verbunden, womit diese miteinander kommunizieren können.

Vorteilhaft ist die Roboterzelle mit einer Steuereinrichtung der Fertigungsvorrichtung verbunden. Weiter vorteilhaft erfolgt die Bedienung der Roboterzelle über eine Bedienereinheit der Fertigungsvorrichtung.

Besonders vorteilhaft wird jedoch die Fertigungsvorrichtung von der Roboterzelle gesteuert, womit ein unbeabsichtigtes Bearbeiten eines Werkstücks mittels der Fertigungsvorrichtung verhindert wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform einer erfindungsgemässen Fertigungseinrichtung mit einer Fertigungsvorrichtung und mit einer erfindungsgemässen positionierbaren Roboterzelle in einer perspektivischen Darstellung,
- Fig. 2: die Fertigungseinrichtung gem. Fig. 1 in einer Ansicht,
- Fig. 3: die Fertigungseinrichtung gem. Fig. 1 in einer Aufsicht,
- Fig. 4: eine perspektivische Detailansicht auf den Roboter der erfindungsgemässen Roboterzelle,
- Fig. 5: eine perspektivische Ansicht auf eine Aufnahmeeinrichtung der erfindungsgemässen Roboterzelle,
- Fig. 6: eine perspektivische Detailansicht auf die Aufnahmeeinrichtung gem. Fig. 5,
- Fig. 7: eine perspektivische Ansicht auf eine Werkstückvereinzelungseinheit der erfindungsgemässen Roboterzelle,
- Fig. 8: eine Seitenansicht auf eine Positioniereinrichtung der erfindungsgemässen Roboterzelle in einer ersten Stellung, und
- Fig. 9: eine Seitenansicht auf die Positioniereinrichtung gem. Fig. 8 in einer zweiten Stellung.

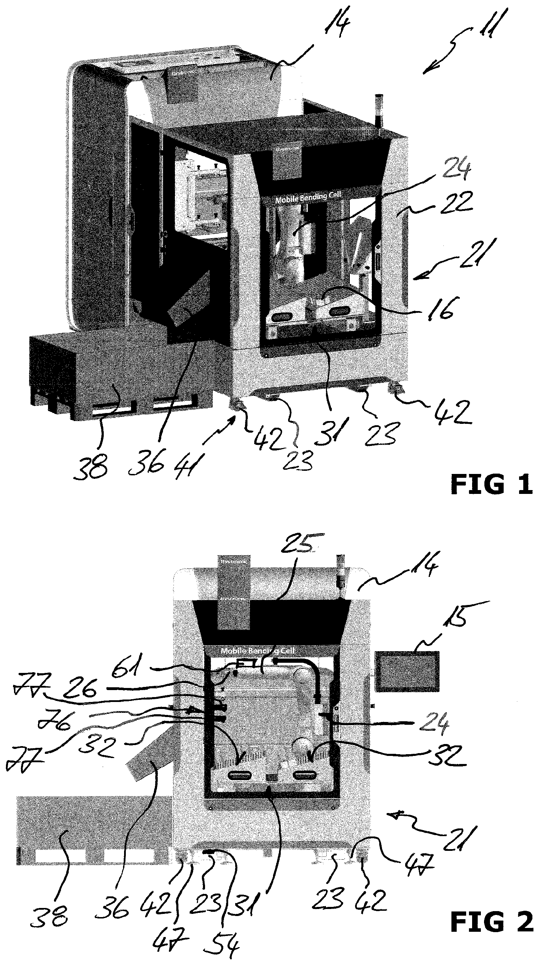

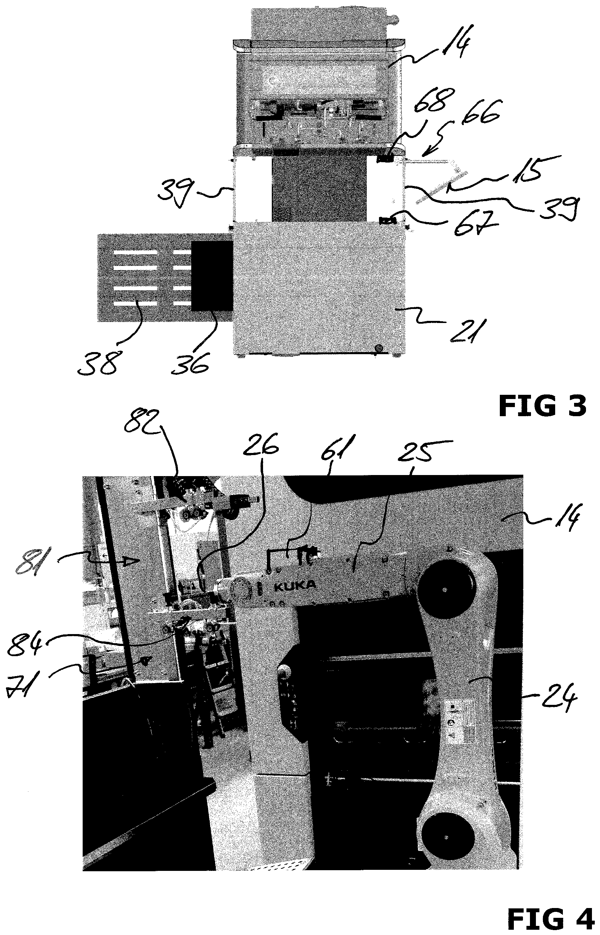

Die in den Figuren 1 bis 4 gezeigte Fertigungseinrichtung 11 umfasst eine Fertigungsvorrichtung, hier eine Biegemaschine 14 und eine positionierbare Roboterzelle 21. Die Roboterzelle 21 wird vor der Biegemaschine 14 angeordnet und bedient die Biegemaschine 14 anschliessend automatisch.

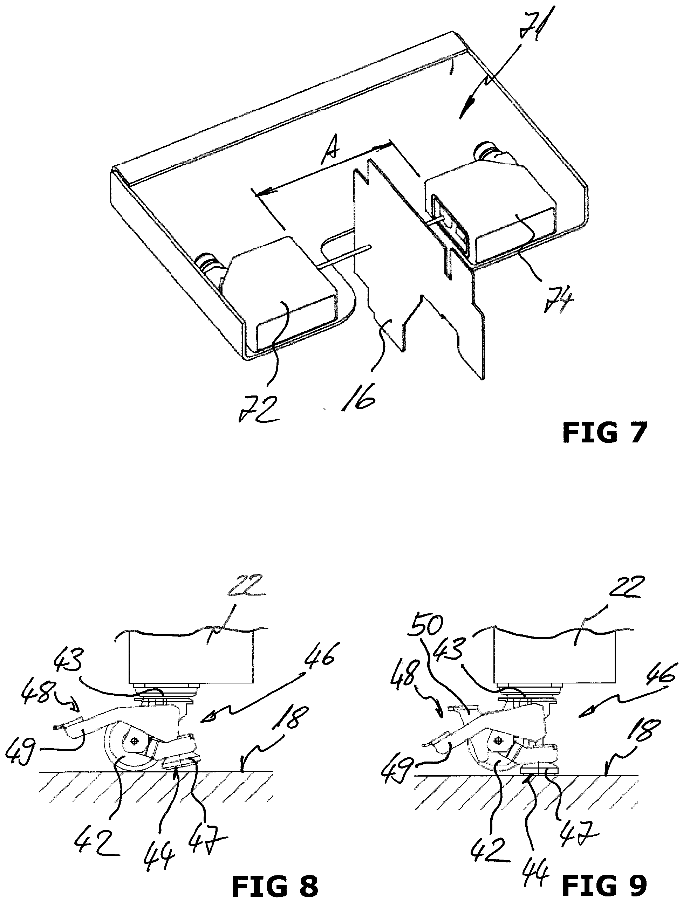

Die Roboterzelle 21 weist ein Gestell 22 sowie eine Positioniereinrichtung 41 zur Umpositionierung der Roboterzelle 21 auf. Die Positioniereinrichtung 41 umfasst hier vier Rollen 42, die vorteilhaft alle über eine Dreheinrichtung 43 drehbar mit dem Gestell 22 verbunden sind. Wie insbesondere weiter aus den Figuren 8 und 9 ersichtlich, ist bei vorteilhaft jeder dieser Rollen 42 jeweils eine Abstützeinrichtung 46 für das Gestell 22 beziehungsweise für die positionierbare Roboterzelle 21 vorgesehen. Die Abstützeinrichtung 46 umfasst ein Auflageelement 47 und eine Betätigungseinrichtung 48, welche einen ersten Hebelmechanismus 49 zum Absenken des Auflageelements 47 sowie einen zweiten Hebelmechanismus 50 zum Anheben des Auflageelements 47 umfasst. Beim Betätigen des ersten Hebelmechanismus 49 kommt das Auflageelement 47 mit dem Untergrund 18 in Anlage und zusätzlich wird das Gestell 22 angehoben, so dass die Rolle 42 nicht mehr mit dem Untergrund 18 in Kontakt steht (siehe Fig. 9). Durch Betätigen des zweiten Hebelmechanismus 50 wird das Auflageelement 47 wieder angehoben und der Kontakt der Rolle 42 mit dem Untergrund 18 ist wieder gegeben, womit die positionierbare Roboterzelle 21 einfach umpositionierbar ist (siehe Fig. 8).

In dem Gestell 22 ist ein Mehrachsen-Roboter 24 als Handlingseinrichtung für das Handling von Werkstücken vorgesehen. Weiter ist im Gestell 22 eine Aufnahmeeinrichtung 31 mit zwei Auflageflächen 32 zur Auflage von Werkstücken 16 und/oder bearbeiteten Werkstücken versehen.

Der Roboter 24 umfasst einen beweglichen Roboterarm 25, der an seinem freien Ende eine Manipuliereinrichtung 26 aufweist, hier in Form eines Greifers zum Ergreifen, Halten und Transportieren der Werkstücke 16 oder der bearbeiteten Werkstücke. Die Manipuliereinrichtung 26 ist vorteilhaft über ein manuelles Schnellwechselsystem festgelegt, womit einfach teilespezifische Manipuliereinrichtungen bedarfsweise anordnenbar sind.

An dem Roboterarm 25 ist lösbar eine erste Sensoreinrichtung 61 zur Erfassung der Position der Roboterzelle 21 relativ zur Biegemaschine 14 vorgesehen. Die erste Sensoreinrichtung 61 ist selbsterkennend und vorteilhaft automatisch selbsterkennend. Die erste Sensoreinrichtung 61 umfasst einen optischen Sensor, hier einen Lasersensor.

Alternativ oder ergänzend umfasst die erste Sensoreinrichtung 61 einen Schallsensor, vorteilhaft einen Ultraschallsensor, und/oder einen mechanischen Sensor und/oder einen magnetischen Sensor.

Alternativ oder ergänzend umfasst die erste Sensoreinrichtung 61 zumindest einen weiteren Sensor, wobei der zumindest eine weitere Sensor ein optischer, vorteilhaft ein Lasersensor, und/oder ein Schallsensor, vorteilhaft ein Ultraschallsensor, und/oder ein mechanischer und/oder ein magnetischer Sensor ist.

Vorteilhaft wirkt ein Positionssensor 44 der Abstützeinrichtung 46 mit der ersten Sensoreinrichtung 61 zusammen, so dass beispielsweise bei einer Position derselben, wie sie in der Figur 8 dargestellt ist, kein Bearbeitungsvorgang der Biegemaschine 14 gestartet wird. Der Positionssensor 44 umfasst beispielsweise einen Drucksensor, welcher einem inaktiven Zustand den Bearbeitungsvorgang der Biegemaschine 14 unterbricht und/oder einen Start dieses Bearbeitungsvorgangs verhindert. Damit werden unkontrollierte Bearbeitungsvorgänge an der Biegemaschine 14 unterbunden und der Werkstückausschuss verringert.

An der Unterseite des Gestells 22 sind zwei Führungen als Umpositioniereinrichtung 23 vorgesehen. An dieser Umpositioniereinrichtung 23 kann beispielsweise eine Gabel eines Gabelstaplers oder Palettenwagen als autonome Umpositioniervorrichtung angreifen, so dass die Roboterzelle 21 einfach umpositionierbar ist. Alternativ kann z. B. entlang dieser Umpositioniereinrichtung 23 auch ein Band, ein Seil und/oder eine Kette geführt werden, welche an einem Kranhaken oder sonstigen Haken einer autonomen Umpositioniervorrichtung zur Umpositionierung der Roboterzelle 21 eingehängt werden kann. Weiter alternativ kann auch ein Griff zur manuellen Umpositionierung durch einen Bediener am Gestell 22 angeordnet sein.

Vorteilhaft wirkt ein Positionssensor 54 der Umpositioniereinrichtung 23 mit der ersten Sensoreinrichtung 61 zusammen. Sobald die Umpositionierung der Roboterzelle 21 abgeschlossen ist, kann dann die neue Position der Roboterzelle 21 relativ zu einer Fertigungsvorrichtung oder einer anderen Bezugsquelle durch die erste Sensoreinrichtung 61 erfasst werden. Der Positionssensor 54 umfasst beispielsweise einen Drucksensor, welcher einem aktiven Zustand die Roboterzelle 21 und insbesondere die erste Sensoreinrichtung 61 deaktiviert. Damit werden unkontrollierte Aktivitäten der Roboterzelle 21 während der Umpositionierung ausgeschlossen.

Die Roboterzelle 21 ist über eine Verbindungseinrichtung 66 mit der Biegemaschine 14 verbunden. Die Verbindung erfolgt hier über Funk. Die Verbindungseinrichtung 66 umfasst einen ersten, an der Roboterzelle 21 angeordneten Sender/Empfänger 67 und einen zweiten, an der Biegemaschine 14 angeordneten Sender/Empfänger 68, die sich vorteilhaft beim oder nach dem Positionieren der Roboterzelle 21 an der Biegemaschine 14 vorteilhaft automatisch erkennen und sich verbinden.

Die Roboterzelle 21 weist eine weitere Sensoreinrichtung 71 zur Erkennung von mehreren, gleichzeitig ergriffenen Werkstücken 16 auf. Diese weitere Sensoreinrichtung 71 umfasst zwei Sensoren 72 und 74, die einander gegenüberliegend und in einem Abstand zueinander angeordnet sind (siehe Fig. 7). Vorteilhaft sind beide Sensoren 72 und 74 gleichartig ausgebildet, hier als optische Sensoren, nämlich Lasersensoren. Sobald ein Werkstück 16 zwischen diesen beiden Sensoren 72 und 74 zu liegen kommt, wird von beiden Sensoren 72 und 74 die Entfernung der jeweiligen Oberfläche zum Sensor 72 bzw. 74 erfasst. Aus der Differenz von Abstand A minus der Summe der beiden von den Sensoren 72 und 74 ermittelten Entfernungen ergibt sich die Dicke des Werkstücks 16. Da diese Dicke des Werkstücks 16 bekannt ist, lässt sich einfach feststellen ob mehr als ein Werkstück 16 ergriffen wurde.

Damit bei einem gleichzeitigen Ergreifen von mehr als einem Werkstück 16 der Fertigungsprozess nicht unnötig verzögert wird, ist eine Werkstückvereinzelungseinheit 81 vorgesehen. Die Werkstückvereinzelungseinheit 81 umfasst eine erste Halteeinrichtung 82 für ein Werkstück 16 sowie eine weitere Halteeinrichtung 84 für ein weiteres Werkstück 16. Die erste Halteeinrichtung 82 und die zweite Halteeinrichtung 84 sind einander zugewandt. Beide Halteeinrichtungen 82 und 84 umfassen jeweils eine Saugeinrichtung, womit aneinanderhaftende Werkstücke 16 einfach voneinander trennbar sind. Alternativ oder ergänzend zu einer Saugeinrichtung kann eine oder beide Halteeinrichtungen 82 und 84 auch eine Klemmeinrichtung umfassen.

Weiter ist eine Umgreifeinrichtung 76 zum Umgreifen eines Werkstücks 16 beziehungsweise eines bearbeiteten Werkstücks vorgesehen. Die Umgreifeinrichtung 76 umfasst hier zwei Greifabschnitte 77, welche bei Bedarf das Werkstück 16 beziehungsweise das bearbeitete Werkstück ergreifen, so dass der Roboter 24 dieses in einer anderen Ausrichtung erneut ergreifen kann. Die Umgreifeinrichtung 76 kann auch als Zwischenlager für ein Werkstück 16 beziehungsweise ein bearbeitetes Werkstück in einer Prozesskette dienen. Auch die Umgreifeinrichtung 76 wirkt vorteilhaft mit einer weiteren oder einer der vorgenannten Sensoreinrichtungen zusammen.

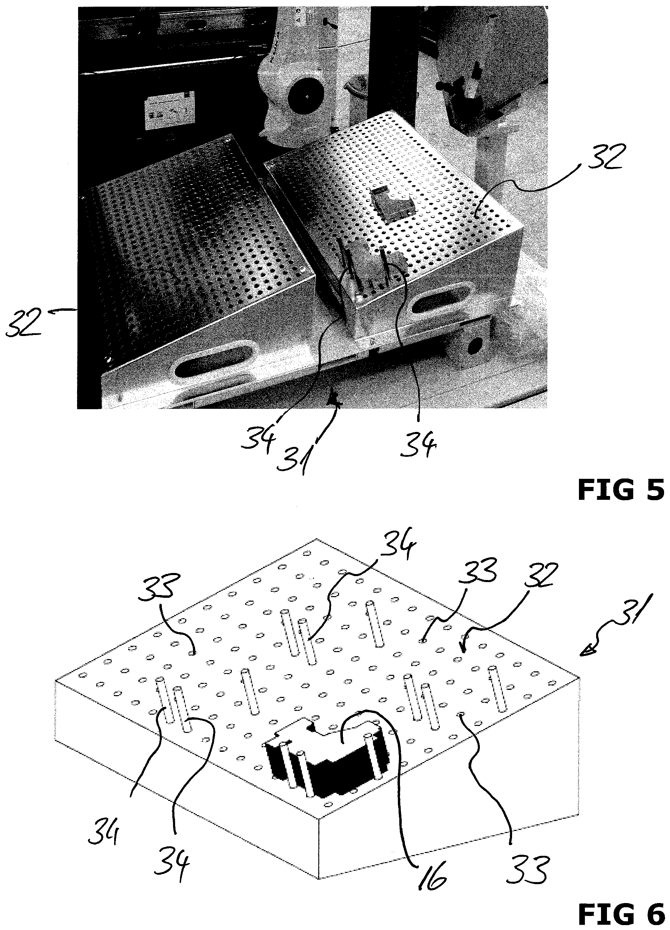

Die in den Figuren 5 und 6 im Detail dargestellte Aufnahmeeinrichtung 31 weist zwei Auflageflächen 32 auf. Jede Auflagefläche 32 ist mit mehreren, in einem Raster angeordneten Löchern 33 versehen. Weiter umfasst die Aufnahmeeinrichtung 31 mehrere Führungselemente 34, welche auswechselbar auf den Auflageflächen 32 anordnenbar sind. Die Führungselemente 34 sind derart angeordnet, dass ein Werkstück 16 beziehungsweise ein Stapel derselben in einer gewünschten Ausrichtung auf der Auflagefläche liegt. Die Aufnahmeeinrichtung 31 wird - beispielsweise entsprechend einem vorgängig definierten Biegeplan - mit den entsprechend Werkstücken bestückt, wobei auch unterschiedlich geformte Werkstücke angeordnet werden können. Die Anordnung von mehreren Stapeln an Werkstücken auf einer Aufnahmeeinrichtung 31 ist denkbar.

Die Position der Führungselemente 34 ist von der Sensoreinrichtung 61 beispielsweise mittels eines Positionssensors, z. B. mittels eines Wegsensors, erfassbar. Aufgrund der dabei ermittelten Werte wird vorteilhaft der Roboter 24 gesteuert, so dass das entsprechende Werkstück 16 für den vorgesehenen Biegevorgang von diesem ergreifbar ist.

Die Roboterzelle 21 wird an der Biegemaschine 14 positioniert und über die Abstützeinrichtungen 46 fixiert. Zuvor wurde oder nun wird die erste Sensoreinrichtung 61 am Roboterarm 25 angeordnet. Mittels der ersten Sensoreinrichtung 61 wird die Position der Roboterzelle 21 relativ zur Biegemaschine 14 erfasst. Die Steuerung des Roboters 24 wird nun an die ermittelte Position der Roboterzelle 21 angepasst.

Sollte die Position der Roboterzelle 21 derart sein, dass der Roboter 24 nicht alle für die beabsichtigte Fertigung zu bedienenden Punkte beziehungsweise Positionen erreichen kann, wird die Roboterzelle 21 umpositioniert und anschliessend diese umpositionierte Position derselben neu erfasst. Vorteilhaft weist die Roboterzelle 21 eine eigene Antriebseinrichtung auf, so dass diese - besonders vorteilhaft autonom - umpositionierbar ist.

Über die kommunikative Verbindung von der Roboterzelle 21 mit der Biegemaschine 14 wird dieselbe von der Roboterzelle 21 gesteuert. Die Bedienung der Roboterzelle 21 erfolgt hier über eine Bedienereinheit 15 der Biegemaschine 14, welche als Touchscreen ausgebildet ist. Die positionierbare Roboterzelle 21 braucht somit keine eigene Bedienereinheit.

Zum Fertigen eines Biegeteils ergreift der Roboter 24 ein Werkstück 16 von der Aufnahmeeinrichtung 31. Der Roboter 24 führt das Werkstück 16 in die weitere Sensoreinrichtung 71 zur Erkennung, ob gleichzeitig mehrere Werkstücke 16 ergriffen wurden. Sollte dies der Fall sein, werden die mehreren Werkstücke 16 von der Werkstückvereinzelungseinheit 81 voneinander getrennt.

Nun führt der Roboter 24 das einzelne Werkstück 16 der Biegemaschine 14 zu und positioniert dieses gegebenenfalls mittels der Hinteranschläge der Biegemaschine entsprechend dem Biegeplan. Nun wird der Biegevorgang gestartet. Dabei kann das Werkstück 16 während dem gesamten Biegevorgang vom Roboter 24 gehalten sein.

Das gebogene Werkstück wird nach Abschluss des Biegevorgangs vom Roboter 24 gehalten und beispielsweise über eine Rutsche 36 einem Aufnahmebehälter 38 zugeführt.

Alternativ kann der Roboter 24 das fertig gebogene Werkstück auch direkt in den Aufnahmebehälter 38 ablegen.

Sofern der Biegeplan noch weitere Biegevorgänge umfasst und das Werkstück von dem Roboter 24 - z. B. aufgrund bereits erfolgter Biegungen - nicht direkt der Biegemaschine 14 zuführbar ist, übergibt der Roboter 24 dieses Werkstück der Umgreifeinrichtung 76 und erfasst das Werkstück erneut, jedoch in einer für den weiteren Bearbeitungsschritt vorteilhafteren Ausrichtung.

Die Roboterzelle 21 weist an der Seite, welche im angeordneten Zustand der Biegemaschine 14 zugewandt ist und/oder an den Seiten, die benachbart zu dieser Seite sind, Schutztüren 39 auf. Diese Schutztüren 39 werden derart zur Biegemaschine 14 positioniert, dass der Arbeitsraum des Roboters 24 nicht direkt zugänglich ist. Zudem kann die entsprechende Seite der Roboterzelle 21 durch die Schutztüren verschlossen werden, was insbesondere beim Umpositionieren der Roboterzelle 21 vorteilhaft ist. Zumindest ein Teil der Schutztüren 39 ist transparent ausgebildet, dadurch ist der Arbeitsbereich von aussen einsehbar. Vorteilhaft weist die Roboterzelle 21 rundherum Schutztüren auf.

Die positionierbare Roboterzelle 21 bildet eine mobile Biegerobotereinheit aus und ist mit wenigen Positionierschritte an eine Fertigungsvorrichtung anordnenbar. Mit der positionierbaren Roboterzelle 21 wird der Einsatzbereich auch von kleineren Fertigungsvorrichtungen erweitert, da nun automatisch beziehungsweise ohne einen Bediener auch an diesen Fertigungsvorrichtungen Serienteile sogar in einem Schichtbetrieb gefertigt werden können. Dadurch wird einerseits die Nutzungsdauer der Biegemaschine erhöht werden und die Herstellungskosten insbesondere für Serienteile wird reduziert.

Als besondere, nicht abschliessende Vorteile der Erfindung werden angesehen:
Die Roboterzelle 21 muss nicht exakt vor der Biegemaschine 14 positioniert werden, sondern nur ungefähr. Mittels der ersten Sensoreinrichtung 61 wird die genaue Lage der Roboterzelle 21 relativ zu der Biegemaschine 14 ermittelt.

Die Schnittstelle zur Biegemaschine 14 erfolgt drahtlos oder über Kabel, z. B. über zwei Ethernetkabel, wobei eines der Datenübertragung und das andere zur Übertragung von Sicherheitssignalen dient.

Eine Sicherheitssteuerungseinrichtung der Fertigungsvorrichtung, wie beispielsweise ein Fusspedal einer Biegemaschine, kann direkt mit der Roboterzelle verbunden werden, was einen Betrieb der Fertigungsvorrichtung mit höheren Geschwindigkeiten fahren als in einem manuellen Betrieb ermöglicht.

Die Programmierung der Fertigungsvorrichtung und auch der positionierbaren Roboterzelle können vollständig offline erfolgen. Beim Verbinden derselben werden diese miteinander koordiniert und - spätestens nach dem Einrichten (Werkzeuge, Robotergreifer, Platinen, Paletten) die Fertigung gestartet. Nach einer Einrichtzeit von wenigen Minuten ist eine automatische Fertigung möglich.

### Bezugszeichenliste

- 11: Fertigungseinrichtung

- 14: Biegemaschine
- 15: Bedienereinheit
- 16: Werkstück

- 18: Untergrund

- 21: Roboterzelle
- 22: Gestell
- 23: Umpositioniereinrichtung
- 24: Roboter
- 25: Roboterarm
- 26: Manipuliereinrichtung

- 31: Aufnahmeeinrichtung
- 32: Auflagefläche
- 33: Löcher in 32
- 34: Führungselement v. 31

- 36: Rutsche

- 38: Aufnahmebehälter
- 39: Schutztüre

- 41: Positioniereinrichtung
- 42: Rolle
- 43: Dreheinrichtung
- 44: Positionssensor v. 47

- 46: Abstützeinrichtung
- 47: Auflageelement
- 48: Betätigungseinrichtung
- 49: 1. Hebelmechanismus
- 50: 2. Hebelmechanismus

- 54: Positionssensor v. 23

- 61: 1. Sensoreinrichtung (Positionserfassungseinrichtung)

- 66: Verbindungseinrichtung
- 67: 1. Sender/ Em pfänger
- 68: 2. Sender/Empfänger

- 71: weitere Sensoreinrichtung (Doppelwerkstückerkennung)
- 72: Sensor
- 74: Sensor
- A: Abstand 72 zu 74

- 76: Umgreifeinrichtung
- 77: Greifabschnitt

- 81: Werkstückvereinzelungseinheit
- 82: 1. Halteeinrichtung
- 84: 2. Halteeinrichtung

## Patentansprüche

1. Positionierbare Roboterzelle zur Anordnung an einer Fertigungsvorrichtung, insbesondere an einer Blechbearbeitungsvorrichtung, wie beispielsweise an einer Biegemaschine (14) oder an einer Abkantpresse, mit einem Gestell (22) zur Aufnahme eines Roboters (24) und mit zumindest einer Aufnahmeeinrichtung (31) für zumindest ein Werkstück (16) sowie mit einer Positioniereinrichtung (41) zur Umpositionierung der Roboterzelle (21), **dadurch gekennzeichnet, dass** zumindest eine erste Sensoreinrichtung (61) zur Erfassung der Position der Roboterzelle (21) relativ zur Fertigungsvorrichtung vorgesehen ist.

2. Roboterzelle nach Anspruch 1, **dadurch gekennzeichnet, dass** zumindest die erste Sensoreinrichtung (61) selbsterkennend und vorteilhaft automatisch selbsterkennend ist.

3. Roboterzelle nach Anspruch 1 oder 2, **dadurch gekennzeichnet, dass** zumindest die erste Sensoreinrichtung (61) zumindest einen ersten Sensor umfasst, wobei der zumindest eine erste Sensor ein optischer, vorteilhaft ein Lasersensor, und/oder ein Schallsensor, vorteilhaft ein Ultraschallsensor, und/oder ein mechanischer und/oder ein magnetischer Sensor ist.

4. Roboterzelle nach Anspruch 3, **dadurch gekennzeichnet, dass** zumindest die erste Sensoreinrichtung (61) zumindest einen weiteren Sensor umfasst, wobei der zumindest eine weitere Sensor ein optischer, vorteilhaft ein Lasersensor, und/oder ein Schallsensor, vorteilhaft ein Ultraschallsensor, und/oder ein mechanischer und/oder ein magnetischer Sensor ist.

5. Roboterzelle nach einem der Ansprüche 1 bis 4, **dadurch gekennzeichnet, dass** eine Umpositioniereinrichtung (23) zur Umpositionierung der Roboterzelle (21) vorteilhaft mit einer, weiter vorteilhaft autonomen, Umpositioniereinrichtung vorgesehen ist, welche vorteilhaft mit der zumindest einen ersten Sensoreinrichtung (61) zusammenwirkt.

6. Roboterzelle nach einem der Ansprüche 1 bis 5, **dadurch gekennzeichnet, dass** die zumindest eine Aufnahmeeinrichtung (31) zumindest ein auswechselbar auf einer Auflagefläche (32) der Aufnahmeeinrichtung (31) anordnenbares Führungselement (34) aufweist und die Position des zumindest einen Führungselements (34) von einer Sensoreinrichtung, vorteilhaft von zumindest der ersten Sensoreinrichtung (61) erfassbar ist.

7. Roboterzelle nach einem der Ansprüche 1 bis 6, **dadurch gekennzeichnet, dass** die Roboterzelle (21) zumindest eine Verbindungseinrichtung (66) zum Verbinden der Roboterzelle (21) mit der Fertigungsvorrichtung aufweist.

8. Roboterzelle nach einem der Ansprüche 1 bis 7, **dadurch gekennzeichnet, dass** zumindest eine weitere Sensoreinrichtung (71) zur Erkennung von mehreren, gleichzeitig ergriffenen Werkstücken (16) vorgesehen ist.

9. Roboterzelle nach einem der Ansprüche 1 bis 8, **dadurch gekennzeichnet, dass** zumindest eine Werkstückvereinzelungseinheit (81) vorgesehen ist, wobei die zumindest eine Werkstückvereinzelungseinheit (81) zumindest eine erste Halteeinrichtung (82) für ein Werkstück (16) sowie zumindest eine weitere Halteeinrichtung (84) für ein weiteres Werkstück (16) umfasst, wobei die zumindest eine erste Halteeinrichtung (82) und die zumindest eine zweite Halteeinrichtung (84) vorteilhaft einander zugewandt sind.

10. Roboterzelle nach einem der Ansprüche 1 bis 9, **dadurch gekennzeichnet, dass** eine Umgreifeinrichtung (76) zum Umgreifen eines Werkstücks (16) beziehungsweise eines bearbeiteten Werkstücks vorgesehen ist, wobei die Umgreifeinrichtung (76) vorteilhaft mit einer weiteren oder zumindest einer der vorgenannten Sensoreinrichtungen (61) zusam menwirkt.

11. Roboterzelle nach einem der Ansprüche 1 bis 10, **dadurch gekennzeichnet, dass** zumindest eine Handlingseinrichtung für das Handling von Werkstücken vorgesehen ist, die vorteilhaft zumindest einen Roboter (24), vorteilhaft ein Mehrachsen-Roboter, umfasst, wobei vorteilhaft zumindest eine, vorteilhaft die erste Sensoreinrichtung (61), an der zumindest einen Handlingseinrichtung vorgesehen ist.

12. Fertigungseinrichtung mit einer Fertigungsvorrichtung, insbesondere mit einer Blechbearbeitungsvorrichtung, wie beispielsweise eine Biegemaschine (14) oder eine Abkantpresse, und mit einer positionierbaren Roboterzelle (21) nach einem der Ansprüche 1 bis 11.

13. Verfahren zum Betrieb einer positionierbaren Roboterzelle (21) nach einem der Ansprüche 1 bis 11 an einer Fertigungsvorrichtung, insbesondere an einer Blechbearbeitungsvorrichtung, wie beispielsweise an einer Biegemaschine (14) oder an einer Abkantpresse, **gekennzeichnet durch** die Schritte:
a) Positionieren der Roboterzelle (21) an der Fertigungsvorrichtung; und
b) Erfassen der Position der Roboterzelle (21) relativ zur Fertigungsvorrichtung mittels zumindest der ersten Sensoreinrichtung (61).

14. Verfahren nach Anspruch 13, **dadurch gekennzeichnet, dass** nach dem Erfassen einer ersten Position der Roboterzelle (21) die Roboterzelle (21) in zumindest eine weitere Position umpositioniert wird.

15. Verfahren nach Anspruch 13 oder 14, **dadurch gekennzeichnet, dass** die Roboterzelle (21) mit der Fertigungsvorrichtung kommunikativ verbunden wird und vorteilhaft über eine Steuereinrichtung der Fertigungsvorrichtung, weiter vorteilhaft über eine Bedienereinheit (15) der Fertigungsvorrichtung, gesteuert wird.
